# EUROPEAN PATENT APPLICATION

(11) **EP 1 715 704 A1**
(43) Date of publication of application: **25.10.2006**
(21) Application number: 05709528.3
(22) Date of filing: 01.02.2005
(51) Int. Cl.: H04Q 7/34, H04B 10/10, H04B 10/105, H04B 10/22, H04Q 7/38, H05B 37/02

(54) **POSITION INFORMATION COMMUNICATION APPARATUS**

(30) Priority: 02.02.2004 JP 2004026066
(71) Applicant: Nakagawa Laboratories, Inc., Tokyo 141-0031 (JP)
(72) Inventor: NAKAGAWA, Masao, Yokohama-shi, Kanagawa 2250001 (JP)
(74) Representative: Klein, Peter
(86) International application number: PCT/JP2005/001382
(87) International publication number: WO 2005/074311

(57) **Abstract**

The objective of the present invention is to provide accurate position data of a cellular phone utilizing illuminative light based radio communication. In FIG. 1, an emergency light or guided light (illuminating device) (10) on for 24 hours, for example, emits a visible light (illuminative light) modulated based on information of its position. A cellular phone (20) having a visible light receiving unit (a camera, for example) may obtain position data by receiving and demodulating that visible light. When conducting emergency communication (emergency telephone number 110 or 119) with the obtained position data, the position data may be automatically added for data communication in addition to the information by voice.

## Description

### TECHNICAL FIELD

The present invention relates to a position data communication device using a mobile phone. It particularly relates to a position data communication device capable of reporting a position of a communicator from a cellular phone.

### BACKGROUND ART

Cellular phones are a key element supporting Japan's industries today. 70 million cellular terminals are being used in Japan. The cellular terminal does not only function as a telephone, but includes an infrared data reader and a camera to take pictures and may even recognize images. Furthermore, having an RF-ID tag is becoming more frequent. Possession of a cellular terminal is equivalent to having a credit card, and even an identification card in some cases. The cellular terminal takes the market position of personal computers of the 1990s.

However, along with wide use of the cellular phone, there is an increase in the number of people making emergency calls to 110 or 119. Emergency calls are made at every turn such as accidents and incidents in the road, in buildings, underground, or within homes from cellular phones. They have surpassed the number of emergency calls made from landline phones. With an emergency call from a landline phone, location may be specified from the phone number without the person making the call giving the position of the phone, and a police patrol car, ambulance, and/or fire engine may be immediately mobilized from the control booth for the emergency telephone number 110 or 119. However, a big problem with making an emergency call from a cellular phone is that the same position specification as with the landline phone is not possible. Only to the extent of being able to specify a base station connected to that cellular phone is possible. There are cases where the person making an emergency call cannot precisely give his/her position due to being in an unknown place, may be distracted and say the wrong thing, or may forget. The range of a base station is typically a few kilometers, which is too broad for immediate mobilization. Mobilization is typically preferred within approximately 30 m.

As a precise specifying method for a cellular phone position, there have been a conventional method according to which a global positioning system (GPS) receiver attached cellular phone receives radio waves from multiple satellites and transmits position data to the emergency telephone number 110 or 119, and a method of conveying the position to the emergency telephone number 110 or 119 using radio waves of the cellular phone. The former is possible in a space appropriate for satellite reception; however, positions within a building, underground, between buildings, within mountainous terrain, within a tunnel, and the like are undetectable. The latter is possible within an area to which cellular phone radio waves reach; however, position accuracy is not favorable since radio waves transmit in a complicated manner. A margin of error of several hundred meters is normal, which is insufficient for emergency mobilization.

Meanwhile, light emitting elements such as emergency lights, guided lights, general lighting, traffic signals, or advertisements are beginning to switch from fluorescent lights and incandescent light bulbs to LEDs. This is because LEDs have high power efficiency, reliability, and a long lifetime. Quick response of LEDs is another reason that cannot be passed over. This advantage of good response may also be utilized for radio communication.

### DISCLOSURE OF THE INVENTION

The objective of the present invention is to provide accurate position data of a cellular phone utilizing illuminative light based radio communication.

### Means for Solving the Problem

In order to achieve the above-given objective of the present invention, the present invention is constituted by an illuminating device including: a position data unit configured to generate position data, a modulator configured to modulate an electronic signal on a power line based on the position data from the position data unit, and a lighting unit configured to generate illuminative light using the electronic signal modulated based on the position data; and a cellular phone, including: a light receiving unit configured to receive the illuminative light modulated based on the position data, a position detector configured to detect position data from the light receiving unit, and a processing unit configured to transmit the detected position data from a transmitter/receiver of the cellular phone.

The light receiving unit, which receives modulated illuminative light based on the position data, may use a camera provided to the cellular phone.

### Effects of the Invention

According to the present invention, the light from a light source of an illuminating device used for displays, lighting, emergency lights, guided lights, and the like is modulated based on position data of that light, and the resulting modulated light is received by a visible light-sensitive element mounted on the cellular phone, thereby allowing transmission of data of the position of the cellular phone to the control booth for the emergency telephone number 110 or 119. The data is valid for emergency mobilization.

### BRIEF DESCRIPTION OF DRAWINGS

FIG. 1 is a diagram showing a structure of the embodiment of the present invention;
FIG. 2 is a diagram showing a structure to report to an emergency communication receiving facility;
FIG. 3 is a diagram showing a structure of an illuminating device configured to transmit position data and a structure of a cellular phone configured to receive it;
FIG. 4 is a diagram showing an operation of receiving position data using a camera; and
FIG. 5 is a diagram showing an operation of receiving position data using a camera and a light receiving unit.

### BEST MODE FOR CARRYING OUT THE INVENTION

An embodiment of the present invention is described using appended drawings.

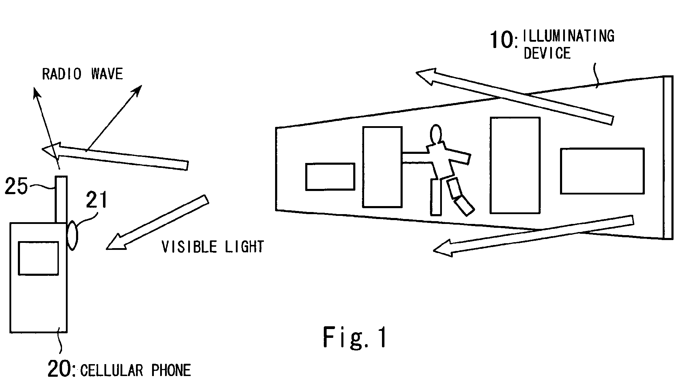

FIG. 1 is a diagram showing a general structure of the embodiment of the present invention.

In FIG. 1, an emergency light or guided light (illuminating device) 10 on for 24 hours, for example, emits a visible light (illuminative light) modulated based on information of its position. A cellular phone 20 having a visible light receiving unit (a camera, for example) may obtain position data by receiving and demodulating that visible light. When conducting emergency communication (e.g., making a call to the emergency telephone number 110 or 119) of the obtained position data, the position data may be automatically added for data communication in addition to the information by voice.

Note that the form of the position data sent to a receiving facility for emergency calls from cellular phones can be 'typidal address plus detailed information (e.g., position within a building)', 'latitude and longitude plus detailed information', or the like. The address may be represented just by alphanumerics or the like if an equivalent of a customer barcode representing the address used for postal mail is used.

The communication range for light is shorter than radio waves, areas in that range tend to often be in shade, and the light has strong directivity. The fact that the communication range for visible light is limited as such, however, is advantageous to grasping a precise position in this case. By the cellular phone automatically sending information obtained through illuminative light communication at that location, position data of a communicator may be sent to the control center for the emergency telephone number 110 or 119. This allows detailed position data such as a precise position, for example, 'in the corridor near room number X on floor Y of the ZZ building' to be sent.

Furthermore, since particularly emergency lights and guided lights are on for 24 hours and are in clear-sighted places, they are convenient for obtaining position data. Note that it is self-evident that transmission of the position data may be carried out from an illuminating device.

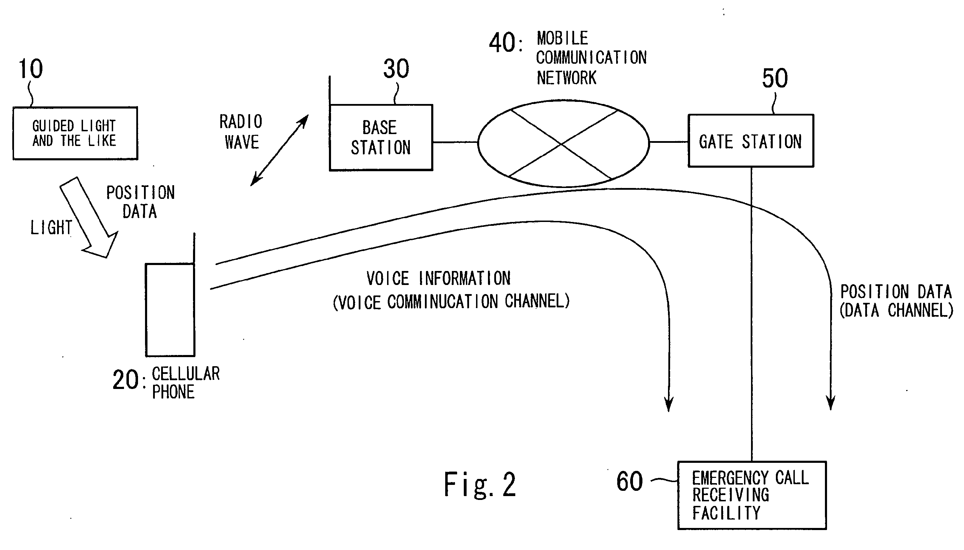

FIG. 2 is a diagram showing a structure to conduct communication from the cellular phone 20 to a control center (emergency call receiving facility) 60 for emergency calls. The cellular phone 20 which obtained position data from a guided light 10 or the like communicates with a base station 30 through a voice communication channel and a data channel. The emergency call receiving facility 60 receives an emergency call from the base station 30 via a mobile communication network 40 and a gate station 50. The position data is communicated through the data channel. The gate station 50 controls communication regarding position data communicated through the data channel.

The communicator (holder of the cellular phone 20) notifying emergency information reports an emergency situation to the emergency call receiving facility (control center) 60 by voice. Meanwhile, the cellular phone 20 automatically transmits the position data, which has been obtained from the guided light 10, to the emergency call receiving facility 60 using the data channel. At the emergency call receiving facility 60, the received position data is displayed as, for example, dots on a map, as well as detailed information (e.g., position within a building).

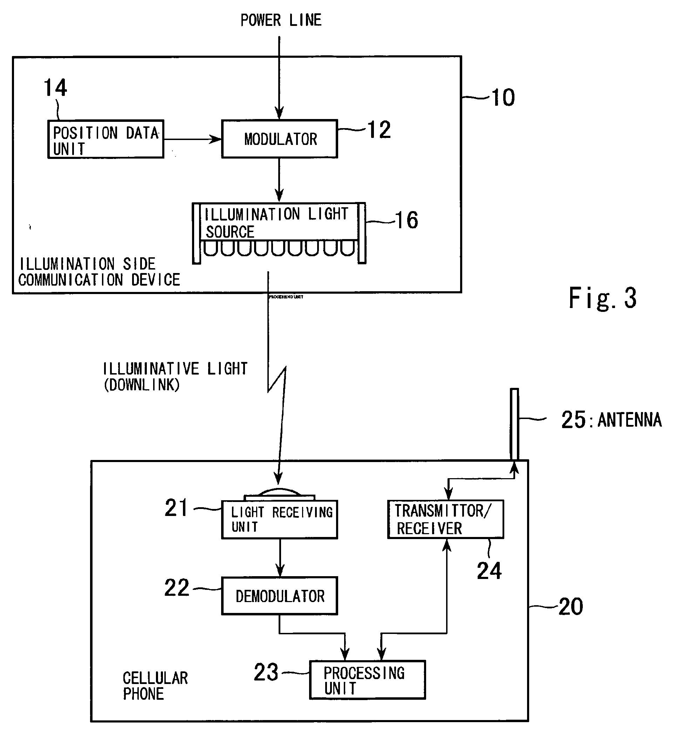

FIG. 3 is a diagram describing in full detail the structure of the illuminating device 10 and the mobile terminal 20 shown in FIG. 1 capable of transmitting position data. In FIG. 3, an alternating voltage supplied from a power line is modulated based on a position data signal from a position data unit 14 by a modulator 12, and then supplied to an illumination light source 16. Modulated illuminative light is irradiated from the illumination light source 16. This modulated illuminative light changes quicker than the human eye can detect, and is thus recognized as normal illuminative light. Use of an LED as the illuminative light source 16 allows generation of modulated fast-changing illuminative light based on the position data.

In the cellular phone 20, a light receiving unit 21 pointing at the illuminative light receives and converts a light signal to an electronic signal, and a demodulator 22 then demodulates it to position data, which is then sent to a processing unit 23. This position data is then sent from a transmitter/receiver 24 to the base unit via an antenna 25. The light receiving unit 21 may be configured by a photodiode or the like.

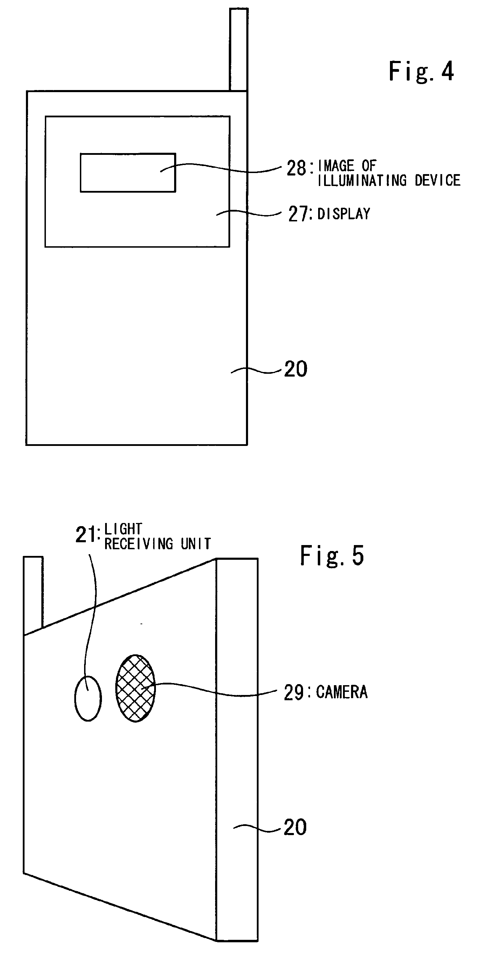

A camera may also be employed as the light receiving unit 21. FIG. 4 is a diagram describing manipulations of a camera equipped cellular phone for a communicator to operate the camera as a light receiving unit for position data so as to send position data. In order to obtain the position data, the sampling frequency for image capture used by the camera attached to the cellular phone must be high enough for detection of change in illuminative light intensity. Regarding reception of information from illuminative light using a digital camera, refer to Matsushita, Nobuyuki et al, 'ID Cam: Smart Camera Capable of Photographing Scenes and IDs Simultaneously' Information Processing Society of Japan Journal Vol. 43 No. 6, pp. 3664-3674, (2002-12) or the like.

In FIG. 4, for example, in a case where the communicator does not know the present position when sending emergency information, first, in order to obtain position data from the illuminating device 10, an image 28 of the illuminating device 10 is confirmed to be in a specified area (for example, a central area) of a display 27 on which images from the camera are displayed, and afterwards a position data reception button is then pressed, for example. As a result, the image of the illuminating device may be sampled, change in light intensity of the illuminating device 10 may be detected from multiple sampled images, and position data is obtained and then reported to the emergency call receiving facility. Processing to acquire position data from images may be carried out by a processing unit configured to process camera images.

FIG. 5 shows a structure of another cellular phone. FIG. 5 shows a structure of a camera equipped cellular phone including the light receiver 21 for receiving position data from illuminative light in addition to a camera 29. According to this structure, the attached camera does not require a high sampling frequency. Moreover, provision of the light receiving unit 21 and an entrance lens of the camera 29 at nearly the same position and adjustment such that the image of the illuminating device is portrayed in the display 27 of the camera as shown in FIG. 5 allows illuminative light to be incident to the light receiving unit 21.

## Claims

1. An illuminating device, comprising:
a position data unit configured to generate position data;
a modulator configured to modulate an electronic signal on a power line based on the position data from the position data unit; and
a lighting unit configured to generate illuminative light from the electronic signal modulated based on position data.

2. A cellular phone, comprising:
a light receiving unit configured to receive illuminative light modulated based on position data;
a position detector configured to detect position data from the light receiving unit; and
a processing unit configured to transmit detected position data from a transmitter/receiver of the cellular phone.

3. The cellular phone of Claim 2, wherein the light receiving unit configured to receive illuminative light modulated based on position data is a camera included in the cellular phone.
